(19) Europäisches Patentamt
European Patent Office
Office européen des brevets

(11) Veröffentlichungsnummer: **0 374 658**
**A2**

(12) # EUROPÄISCHE PATENTANMELDUNG

(21) Anmeldenummer: 89122777.9

(22) Anmeldetag: 09.12.89

(51) Int. Cl.⁵: **C08L 5/00, C08K 3/32,**
**C08K 5/09, C08K 5/17**

(30) Priorität: 23.12.88 DE 3843416

(43) Veröffentlichungstag der Anmeldung:
**27.06.90 Patentblatt 90/26**

(84) Benannte Vertragsstaaten:
**AT DE FR GB NL**

(71) Anmelder: **Wolff Walsrode Aktiengesellschaft**
**Postfach**
**D-3030 Walsrode 1(DE)**

(72) Erfinder: **Wilke, Michaela, Dr.**
**Ahornweg 9**
**D-3043 Schneverdingen(DE)**
Erfinder: **Szablikowski, Klaus, Dr.**
**Claudiusstrasse 5**
**D-3030 Walsrode(DE)**

(74) Vertreter: **Zobel, Manfred, Dr. et al**
**c/o BAYER AG Konzernverwaltung RP**
**Patente Konzern**
**D-5090 Leverkusen 1 Bayerwerk(DE)**

(54) **Xanthan mit verbesserter Löslichkeit und Verfahren zur Herstellung.**

(57) Die Löslichkeit von Xanthan wird verbessert durch Zusatz wasserlöslicher Carbonsäuren oder Hydrogenphosphate.

EP 0 374 658 A2

## Xanthan mit verbesserter Löslichkeit und Verfahren zur Herstellung

Biopolymere vom Typ Xanthan sind bekannt. Xanthan ist ein durch Fermentation gewonnenes Heteropolysaccharid. Als geeignete Kulturen haben sich Xanthomonas-Stämme, wie z.B. Xanthomonas campestris, erwiesen. Xanthan besteht aus einer Cellulosehauptkette und dreigliedrigen Seitenketten. Die daraus hergestellten wäßrigen Lösungen sind auch schon bei relativ niedrigen Xanthan-Konzentrationen hochviskos und finden vielfältige Anwendungen in den Bereichen Lebensmittel, Kosmetik und Technik.

Ein bekannter Nachteil von Xanthan ist die Schwierigkeit, sich schnell zu lösen und zur Klumpenbildung zu neigen. Das kann dazu führen, daß das trockene Xanthan zwar schnell von einem Flüssigkeitsfilm überzogen wird, der Innenraum eines Klumpens aber kaum von der Flüssigkeit durchdrungen wird. Dadurch kann es zusätzlich zu einer Verlängerung des Lösevorganges kommen, wobei der Einsatz stark scherender Rührwerke kaum erkennbare Vorteile liefert.

Weiterhin ist bei den bekannten Xanthan-Pulvern nachteilig, daß sie im trockenen Zustand, z.B. beim Umfüllen, leicht stauben.

Eine Alternative zum Einsatz von trockenem, pulverförmigen Xanthan besteht darin, bereits fertige Lösungen anzubieten bzw. einzusetzen. Hieran ist zum einen die begrenzte Lagerstabilität von Polysaccharid-Lösungen nachteilig, da diese Lösungen in unstabilisierter Form verderbnisanfällig sind. Zum anderen ist der Transport von Lösungen mit hohen Kosten verbunden.

Es wurde daher auch versucht, daß Xanthan-Pulver so in den Eigenschaften zu verändern, daß es einfacher zu lösen und die Lösezeit geringer ist.

So wird in der EP-A-254 603 ein Verfahren zur Herstellung von Biopolymer-Granulaten beschrieben, das dazu führt, daß die Lösezeit verringert wird. Die Biopolymer-Granulate bestehen aus Xanthan und einem Feuchthalte-/ oder Dispergiermittel. Durch das beschriebene Verfahren soll es möglich sein, die Lösezeit von ca. 50 min auf ca. 20 min zu reduzieren.

Nachteilig ist der Einsatz bestimmter Feuchthalte-/ oder Dispergiermittel, die wenigstens zum Teil die Verwendung des hergestellten Granulats als Lebensmittelzusatzstoff aus toxikologischer Sicht bzw. wegen fehlender Zulassung nicht mehr erlauben. Ferner ist eine Lösezeit von 20-30 min aus verfahrenstechnischer Sicht immer noch relativ lang, so daß insgesamt die so hergestellten Produkte einen begrenzten Anwendungsbereich besitzen.

Damit besteht also immer der Bedarf nach einem trockenen, pulverförmigen Produkt auf Basis Xanthan mit einem verbesserten Dispergierverhalten und verringerter Lösezeit.

Aufgabe der Erfindung war es, Xanthanteilchen mit verbesserter Löslichkeit, insbesondere in wäßrigen Systemen, bereitzustellen.

Gegenstand der Erfindung sind Xanthanteilchen X mit wenigstens einem wasserlöslichen, aufgebrachten Zusatzstoff A zur Verbesserung der Löslichkeit, insbesondere in wäßrigen Systemen, dadurch gekennzeichnet, daß der Zusatzstoff A eine (Poly)Carbonsäure A1 oder ein Salz davon oder ein Phosphat bzw. ein Hydrogenphosphat A2 ist.

Die Verbindungen A1 sind Mono- oder Polycarbonsäuren. Besonders bevorzugte Verbindungen A1 haben wenigstens zwei funktionelle Gruppen, insbesondere handelt es sich um Komplexbildner wie Weinsäure und insbesondere Ethylendiamintetraessigsäure.

Die Verbindungen A2 sind vorzugsweise keine polymeren bzw. kondensierten Verbindungen. Es kann sich um Phosphate und Mono- und Dihydrogenphosphate handeln, insbesondere um Alkalihydrogenphosphate. Besonders bevorzugt ist Kaliumdihydrogenphosphat und Natriumtripolyphosphat.

Die Auftragsmenge der insgesamt aufgebrachten Zusatzstoffe A, bezogen auf das Xanthan X, liegt vorzugsweise bei 5 bis 20 Gew.-%, insbesondere 5 bis 10 Gew.-%.

Bei Verwendung von Carbonsäuren A1 wird in einer besonders bevorzugten Ausführungsform als zweite Komponente ein Carbonat oder Hydrogencarbonat zusätzlich zugesetzt, wobei die Auftragung beider Komponenten im allgemeinen in zwei getrennten Arbeitsgängen erfolgt. Ein besonders bevorzugtes Hydrogencarbonat ist Natriumhydrogencarbonat.

Gegenstand der Erfindung ist weiterhin ein Verfahren zur Herstellung der erfindungsgemäßen Xanthanteilchen, dadurch gekennzeichnet, daß Xanthanpulver mit einer vorzugsweise wäßrigen Lösung wenigstens eines Zusatzstoffes A in einer geeigneten Mischapparatur behandelt wird. In einer ganz besonders bevorzugten Ausführungsform findet diese Behandlung wenigstens zum Teil in einem an sich bekannten Wirbelbett statt. Während der Behandlung im Wirbelbett werden die Xanthanteilchen mit der vorzugsweise wäßrigen Lösung der Zusatzstoffe A behandelt und von der Lösung überzogen. Das Wasser wird im Verlauf der Behandlung durch Trocknung entfernt und man erhält ein trockenes Produkt, das aus agglomerierten Xanthanteilchen sowie dem aufgebrachten Zusatzstoff A besteht. Wird zusammen mit der Carbonsäure A1 ein Carbonat oder Hydrogencarbonat aufgebracht, wird in einer besonders bevorzugten Ausführungsform wie folgt verfahren. Zunächst wird eine Lösung des Carbonats bzw. des Hydrogencarbonats auf das im Wirbelbett befindliche Xanthan-Pulver aufgesprüht. Anschließend wird in einem zweiten Arbeitsgang die Carbonsäure aufgetragen, wobei die Auftragung nicht zwingend im Wirbelbett-Trockner erfolgen muß, sondern z.B. auch durch Trocknen einer Aufschlämmung, bestehend aus vorbehandeltem Xanthan und einer alkoholischen Carbonsäure-Lösung, in einem Rotationsverdampfer erfolgen kann.

Die so hergestellten trockenen Produkte auf Basis Xanthan zeichnen sich dadurch aus, daß sie z.B. beim Umfüllen keinerlei Staubentwicklung zeigen und gut rieselfähig sind. Wird ein so hergestelltes Trocken-Pulver in Wasser eingetragen, so stellt man fest, daß keine Klumpenbildung eintritt und innerhalb sehr kurzer Zeit eine vollständige Lösung erhalten wird. Zur genauen Verfolgung des Lösevorganges ist es möglich, eine viskosimetrische Analysenmethode anzuwenden. Hierzu wird das trockene Xanthan-Pulver in Wasser eingetragen und der Viskositätsaufbau gegen die Zeit mit einem Viskosimeter gemessen. Als Lösezeit wird die Zeit bestimmt, bei der der Viskositätsanstieg gleich Null ist.

Setzt man für diese Messung ein handelsübliches Trocken-Xanthan ein, so erhält man Lösezeiten von ca. 180 min. Wird hingegen ein erfindungsgemäßes Xanthan-Produkt vermessen, so finde man Lösezeiten < 10 min, bevorzugt < 5 min.

Überraschend wurde gefunden, daß das Viskositätsniveau der erfindungsgemäß hergestellten Xanthan-Produkte höher liegt als das der unbehandelten Xanthan-Probe.

Damit ist die sogenannte Viskositätsausbeute, d.h. die Viskosität bezogen auf die Konzentration der untersuchten Substanz höher.

Die trockenen Xanthan-Produkte, hergestellt durch Behandlung von trockenem Xanthan-Pulver im Wirbelbett unter gleichzeitigem Aufsprühen mindestens einer Komponente, zeichnen sich also im trockenen Zustand durch Staubfreiheit, gute Rieselfähigkeit und bei Einsatz in Lösungen durch klumpenfreies Einarbeiten, sehr kurze Lösezeiten und höheres Viskositätsniveau, bezogen auf unbehandeltes Xanthan, aus.

Die erfindungsgemäß hergestellten Produkte eignen sich durch die damit verknüpften Eigenschaften für eine Vielzahl von Anwendungen, insbesondere für die Anwendungsgebiete Lebensmittel, Pharma und Kosmetik, aber auch für technische Anwendungen.

## Beispiele

Die erhaltenen Resultate der Beispiele sind in der Tabelle 1 aufgeführt.

## Beispiel 1

50 g eines handelsüblichen, trockenen Xanthan-Pulvers werden in die Wirbelbettkammer eines Wirbelbett-Trockners, Modell 710 der Firma Büchi, gefüllt. Zum Besprühen werden 100 ml einer 2,5 gew.-%igen EDTA-Lösung eingesetzt, die über ein im Gerät befindliches Pumpen-/Düsensystem auf das Wirbelbett gesprüht wird. Folgende Geräteparameter wurden eingestellt: Heizung ca. 80° C; Pumpe 4,5 SKT; Sprühdruck 0,8 bis 1,2 bar; Filterreinigung 3-7 SKT; Aspirator 0-1,5 SKT.

Der Vorgang ist dann beendet, wenn die gesamte Sprühlösung auf das Xanthan-Pulver aufgetragen ist. Das trockene Xanthan-Produkt wird folgendermaßen zur Bestimmung der Dauer des Löseprozesses sowie der Viskosität eingesetzt. Als Viskosimeter wird ein Rotationsviskosimeter der Firma Haake, Modell RV 20, mit der Meßeinrichtung Meßbecher MV und dem Flügeldrehkörper SV II FL sowie einer Temperiereinheit für die Meßeinrichtung eingesetzt. Die Meßtemperatur beträgt 20° C, das Schergefälle 600 s$^{-1}$.

Zur Messung werden 0,25 g trockenes Xanthan exakt eingewogen und in 49,75 g Wasser verlustfrei überführt. Die Messung wird so lange durchgeführt, bis kein Viskositätsanstieg mehr feststellbar ist. Die Auswertung der Meßdaten erfolgt folgendermaßen, indem in einem Diagramm die Viskosität $\eta$ in mPa.s gegen die Meßzeit t in min aufgetragen wird.

Als Lösezeit, also als die Zeit, die zum Auflösen der Substanz bis zum Erreichen einer konstanten Viskosität nötig ist, wird der Punkt auf der t-Achse angegeben, bei dem die Steigung des ermittelten Graphen bzw. dessen Regressionskurve, gleich Null ist.

Für das hier untersuchte Xanthan-Produkt beträgt die Lösezeit 4 min.

Zur Bestimmung der Viskosität wurde in das Viskosimeter Typ RV 20 das Meßsystem ZA 30 eingesetzt und bei einem Schergefälle von 40 s$^{-1}$ gemessen. Siehe auch Tabelle 1.

3

Beispiel 2

50 g handelsübiches Xanthan-Pulver wurde, wie in Beispiel 1 beschrieben, behandelt. Als Sprühlösung wurden 100 ml einer 5 gew.-%igen Weinsäure-Lösung eingesetzt. Die Bestimmung der Lösezeit, entsprechend Beispiel 1, ergab einen Wert von 6 min. Siehe auch Tabelle 1.


Beispiel 3

50 g handelsübliches Xanthan-Pulver wurde, wie in Beispiel 1 beschrieben, behandelt. Als Sprühlösung wurden 100 ml einer 5 gew.-%igen wäßrigen Natriumhydrogencarbonat-Lösung verwendet.

Das erhaltene Trockenprodukt wurde in 100 ml einer 5 gew.-%igen ethanolischen Weinsäure-Lösung aufgeschlämmt und am Rotationsverdampfer bei Wasserstrahlvakuum zur Trockne eingeengt. Die Lösezeit, entsprechend Beispiel 1 bestimmt, betrug 4 min. Siehe auch Tabelle 1.

| Beispiel Nr. | Zusatzstoff | Lösezeit [min] | Viskosität [mPa.s} | Einarbeitungsverhalten |
|---|---|---|---|---|
| 1 | EDTA | 4 | 341 | gutes Dispergiervermögen keine Klumpenbildung |
| 2 | Weinsäure | 6 | 638 | gutes Dispergiervermögen keine Klumpenbildung |
| 3 | $NaHCO_3$/Weinsäure | 4 | 552 | gutes Dispergiervermögen keine Klumpenbildung |
| unbehandeltes Xanthan (Handelsprodukt) | --- | 180 | 291 | schlechtes Einarbeitungsverhalten, Klumpenbidung |


**Ansprüche**

1. Xanthanteilchen X mit wenigstens einem wasserlöslichen, aufgebrachten Zusatzstoff A zur Verbesserung der Löslichkeit, dadurch gekennzeichnet, daß der Zusatzstoff A eine (Poly)Carbonsäure A1 oder ein Salz davon oder ein Phosphat oder Hydrogenphosphat A2 ist.

2. Xanthanteilchen gemäß Anspruch 1, dadurch gekennzeichnet, daß die Verbindung A1 wenigstens zwei funktionelle Gruppen trägt.

3. Xanthanteilchen nach wenigstens einem der vorhergehenden Ansprüche, dadurch gekennzeichnet, daß die Verbindungen A1 Komplexbildner sind.

4. Xanthanteilchen nach wenigstens einem der vorhergehenden Ansprüche, dadurch gekennzeichnet, daß die Verbindung A1 Ethylendiamintetraessigsäure oder Weinsäure oder ein Salz davon ist.

5. Xanthanteilchen nach Anspruch 1, dadurch gekennzeichnet, daß die Verbindung A2 Kaliumdihydrogenphosphat oder Natriumtripolyphosphat ist.

6. Xanthanteilchen nach wenigstens einem der vorhergehenden Ansprüche, dadurch gekennzeichnet, daß die Auftragsmenge der aufgebrachten Zusatzstoffe A 5 bis 20 Gew.-%, bezogen auf das reine Xanthan, beträgt.

7. Xanthanteilchen nach wenigstens einem der vorhergehenden Ansprüche, dadurch gekennzeichnet, daß zusätzlich ein Carbonat oder Hydrogencarbonat auf das Xanthan aufgebracht wird.

8. Verfahren zur Herstellung von Xanthanteilchen mit verbesserter Löslichkeit gemäß wenigstens einem der vorhergehenden Ansprüche, dadurch gekennzeichnet, daß Xanthanpulver mit der Lösung eines Zusatzstoffes A behandelt wird.

9. Verfahren nach Anspruch 8, dadurch gekennzeichnet, daß die Behandlung mit einer wäßrigen Lösung des Zusatzstoffes A erfolgt.

10. Verfahren nach wenigstens einem der Ansprüche 8 und 9, dadurch gekennzeichnet, daß sie zumindest teilweise in einem Wirbelbett erfolgt.